# EUROPÄISCHE PATENTSCHRIFT

(11) **EP 1 448 084 B1**
(45) Veröffentlichungstag und Bekanntmachung des Hinweises auf die Patenterteilung: **08.06.2005**
(21) Anmeldenummer: 02785331.6
(22) Anmeldetag: 30.10.2002
(51) Int. Cl.: A47J 31/44

(54) **HAUSHALTSGERÄT MIT EINEM BEDIEN- UND EINEM ANZEIGEELEMENT**
HOUSEHOLD APPLIANCE COMPRISING A CONTROL ELEMENT AND A DISPLAY ELEMENT
APPAREIL MENAGER COMPRENANT UN ELEMENT DE COMMANDE ET UN ELEMENT D'AFFICHAGE

(30) Priorität: 02.11.2001 DE 10154046
(43) Veröffentlichungstag der Anmeldung: 25.08.2004
(73) Patentinhaber: Miele & Cie. KG, 33332 Gütersloh (DE)
(72) Erfinder: BRINKEMPER, Klaus, 33378 Rheda-Wiedenbrück (DE); BÜHLMEYER, Michael, 33428 Harsewinkel (DE); FOX, Norbert, 33442 Herzebrock (DE); HAHN, Uwe, 33332 Gütersloh (DE); HEIDEMANN, Tobias, 49328 Melle (DE); NATTKEMPER, Jörg, 59071 Hamm (DE); NIEHAUS, Detlef, 59067 Hamm (DE); POHLÜKE, Margit, 33334 Gütersloh (DE)
(86) Internationale Anmeldenummer: PCT/EP2002/012093
(87) Internationale Veröffentlichungsnummer: WO 2003/037151

(56) Entgegenhaltungen:
- WO-A-00/71010
- WO-A-99/34716
- US-A- 6 095 031

## Beschreibung

Die Erfindung betrifft ein Haushaltsgerät der im Oberbegriff des Anspruchs 1 genannten Art.

Ein solches Haushaltsgerät ist aus WO-A-99/34 716 bekannt.

Ein weiteres Haushaltsgerät ist beispielsweise aus der DE 197 01 033 C2 bekannt. Dieses Haushaltsgerät weist ein Anzeigeelement und verschiedene Bedienelemente auf, die ergonomisch und optisch vorteilhaft angeordnet sind. Ferner enthält dieses bekannte Haushaltsgerät eine Steuereinheit, die es beispielsweise ermöglicht, Hinweise zur Handhabung des Haushaltsgeräts über die Bedienelemente einzustellen und über das Anzeigeelement anzuzeigen. Darüber hinaus ist es möglich, das bekannte Haushaltsgerät zu programmieren, so dass eine Anzeige in unterschiedlichen Sprachen gewährleistet ist.

Ein Nachteil des bekannten Haushaltsgeräts ist, dass sich die Übersichtlichkeit bei der Benutzung einer Mehrzahl von Programmen, Programmparametern und Einstellmöglichkeiten der Parameter verschlechtert. Das Konsumentenverhalten wird jedoch immer mehr von individuellen Wünschen geprägt, was zu einer Zunahme der Einstellmöglichkeiten an Haushalts- und Küchengeräten führt. Die Anpassung von Haushaltsgeräten an die gestiegenen Kundenwünsche, nämlich die Möglichkeit zu haben, Haushaltsgeräte auf persönliche Vorlieben einstellen zu können, bringt bei einer Mehrzahl von Benutzern bei den bekannten Haushaltsgeräten den weiteren Nachteil, dass bei jedem Benutzenuechsel individuelle Einstellungen erneut vorzunehmen sind.

Der Erfindung stellt sich somit das Problem, ein Haushaltsgerät zu schaffen, das bei einer Mehrzahl von Programmen, Programmparametem und Einstellmöglichkeiten der Programmparameter eine verbesserte Übersichtlichkeit gewährt und bei dem von einem oder für einen Benutzer oder eine Benutzergruppe modifizierte Programme wiederholt aufrufbar sind.

Erfindungsgemäß wird dieses Problem mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer verbesserten Übersichtlichkeit, wodurch eine einfachere Bedienung des Haushaltsgeräts erreicht ist, insbesondere darin, dass eine von einem oder für einen Benutzer oder eine Benutzergruppe ausgewählte Einstellung des (der) Programmparameter(s) unter einer Benutzerkennzeichnung abgespeichert und über die Auswahl eines Programms aufrufbar ist, so dass ein wiederholtes Verwenden von einem oder für einen Benutzer oder eine Benutzergruppe modifizierter Programme möglich ist. Gerade bei einer Vielzahl von Programmen, Programmparametern und Einstellmöglichkeiten der Programmparameter sowie häufig wechselnden Benutzern ist bei wiederholter Benutzung durch einen Benutzer oder eine Benutzergruppe mit ähnlichen Vorlieben die Bedienung wesentlich vereinfacht und dadurch viel Zeit eingespart.

Grundsätzlich sind die Bedien- und Anzeigeelemente in ihrer funktionellen Belegung freiwählbar. Zweckmäßigerweise ist ein erstes Bedienelement zur Auswahl des Programms und ein zweites Bedienelement zur Auswahl des Programmparameters sowie dessen Einstellung und zur Zuordnung der Einstellung zu der Benutzerkennzeichnung ausgebildet, wobei dem ersten Bedienelement ein erstes Anzeigeelement und dem zweiten Bedienetement ein zweites Anzeigeelement zugeordnet ist.

Eine vorteilhafte Weiterbildung der erfindungsgemäßen Lehre sieht vor, dass mit der Einstellung wenigstens eines ersten Programmparameters in einem ersten Programm ein dem ersten Programmparameter entsprechender zweiter Programmparameter in einem zweiten Programm eingestellt ist. Hierdurch ist ein einfaches und zeitsparendes modifizieren mehrerer Programme ermöglicht, da ein aufwendiges Wiederholen der gleichen Einstellung eines Programmparameters für verschiedene Programme entfällt.

Eine weitere vorteilhafte Weiterbildung sieht vor, dass wenigstens ein Bedienelement eine Taste aufweist, da Tasten für das Bestätigen von Eingaben oder Einstellungen sinnvolle Bauteile darstellen und darüber hinaus kostengünstig sind.

Eine vorteilhafte Weiterbildung der vorgenannten Ausführungsform sieht vor, dass wenigstens ein Bedienelement ein Drehimpulsgeber mit integrierter Tastenfunktion ist Auf diese Weise ist eine schnelle und feinstufige Anwahl von Programmen, Programmparametem und Einstellungen der Parameter ermöglicht.

Eine andere vorteilhafte Weiterbildung der erfindungsgemäßen Lehre sieht ein Sicherungsmittel zur Verhinderung einer unbefugten oder ungewollten Vornahme der Einstellung unter einer Benutzerkennzeichnung vor, so dass ein versehentliches oder missbräuchliches Ändern an den unter einer Benutzerkennzeichnung abgespeicherten Einstellungen verhindert ist.

Eine vorteilhafte Weiterbildung der vorgenannten Ausführungsform sieht vor, dass der Zugriff auf eine Benutzerkennzeichnung kennwort-geschützt ist. Auf diese Weise ist eine einfache und weitgehend sichere Zugriffsbeschränkung erreicht.

Eine weitere vorteilhafte Weiterbildung der erfindungsgemäßen Lehre sieht vor, dass die vorgenommene Auswahl einer einzelnen Benutzerkennzeichnung oder aus einer Gruppe von Benutzerkennzeichnungen auf dem ersten und/oder dem zweiten Anzeigeelement anzeigbar ist. Hierdurch ist der Benutzer bei der Bedienung des Haushaltsgeräts ständig darüber informiert, ob er eine spezielle Benutzerkennzeichnung verwendet. Ferner besteht die Möglichkeit, auch die Benennung der speziellen Benutzerkennzeichnung anzuzeigen.

Eine andere vorteilhafte Weiterbildung sieht vor, dass eine Benutzerkennzeichnung als eine Standard-Benutzerkennzeichnung ausgebildet ist, wobei das Datenverarbeitungsmittel in Abhängigkeit einer vorher festgelegten Schaltbedingung selbsttätig von einer beliebigen Benutzerkennzeichnung auf die Standard-Benutzerkennzeichnung umschaltet. Auf diese Weise ist es dem Benutzer beispielsweise ermöglicht, Einstellungen unter einer für jedermann frei zugänglichen Standard-Benutzerkennzeichnung vorzunehmen, abzuspeichem und wieder aufzurufen. Sofern die anderen Benutzerkennzeichnungen nicht durch Sicherungsmittel geschützt sind, ist hierdurch auch ein Schutz gegen ungewollte Einstellungen unter diesen Benutzerkennzeichnungen verwirklicht.

Sofern es sich bei dem erfindungsgemäßen Haushaltsgerät um einen Getränkebereiter handelt ist es besonders vorteilhaft, dass durch den Zapfvorgang die Einstellung wenigstens eines Programmparameters unter der Benutzerkennzeichnung abspeicherbar ist. Hierdurch ist die Bedienung weiter vereinfacht, da mit einem Bedienvorgang sowohl das Zapfen des Getränks wie auch die Abspeicherung der Einstellung erfolgt.

Ein Ausführungsbeispiel der Erfindung ist in den Zeichnungen rein schematisch dargestellt und wird nachfolgend näher beschrieben. Es zeigt
- Figur 1: ein erfindungsgemäßes Haushaltsgerät in teilweiser und vereinfachter Detailansicht und
- Figur 2: das erfindungsgemäße Haushaltsgerät aus Fig. 1 in vereinfachter Darstellung.

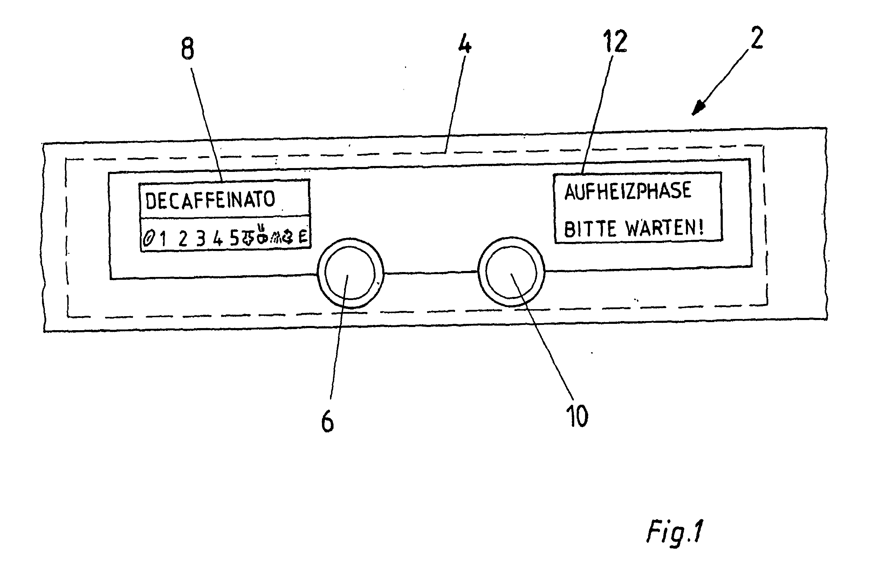

In der Fig. 1 ist ein erstes Ausführungsbeispiel eines erfindungsgemäßen Haushaltsgeräts in einem Betriebszustand gezeigt. In diesem Ausführungsbeispiel ist das erfindungsgemäße Haushaltsgerät ein Getränkebereiter 2, der ein Bedien- und Anzeigefeld 4 aufweist, das in Fig. 1 gestrichelt dargestellt ist. In der linken Hälfte des Bedien- und Anzeigefeldes 4 ist ein Bedienelement 6 zur Auswahl eines Programms des Getränkebereiters vorgesehen. Die Programme und über das Bedienelement 6 vorgenommene Eingaben werden auf einem Anzeigeelement 8 zur Anzeige gebracht, so dass das Bedienelement 6 und das Anzeigeelement 8 einander zugeordnet sind. Programme sind beispielsweise das Zapfen unterschiedlicher Kaffeesorten , Spülen, Entkalken, die Abgabe von Heißwasser oder Dampf und der Einstellmodus. In der rechten Hälfte des Bedien- und Anzeigefeldes 4 ist ein Bedienelement 10 zur Auswahl der Programmparameter und zur Zuordnung der Programmparameter zu einer Benutzerkennzeichnung vorgesehen. Die Programmparameter und die Benutzerkennzeichnung sowie über das Bedienelement 10 vorgenommene Eingaben werden auf einem Anzeigeelement 12 zur Anzeige gebracht, so dass das Bedienelement 10 und das Anzeigeelement 12 einander zugeordnet sind. Programmparameter sind beispielsweise Tassengröße, Temperaturniveau, Beleuchtung, Sprache, Wasserhärte, Zeiten für automatisches Ein- und Ausschalten des Getränkebereiters oder von anderen Funktionen.

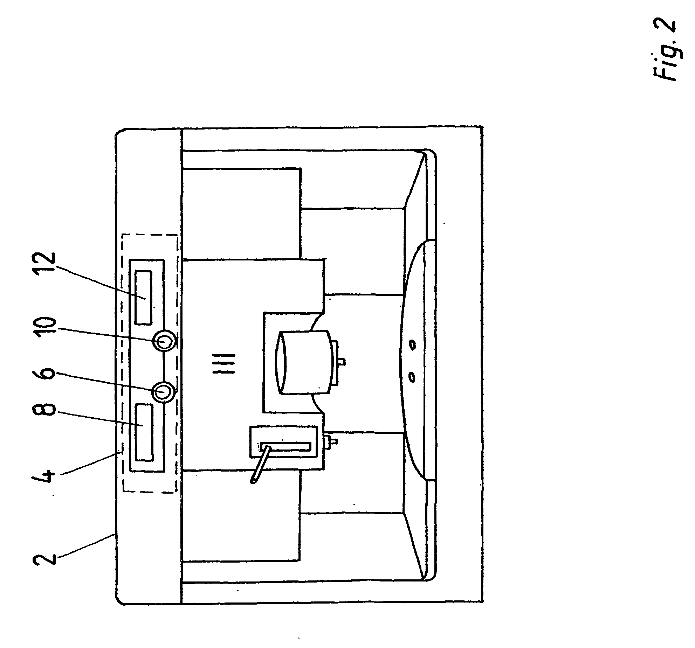

Bei diesem Ausführungsbeispiel sind die Bedienelemente 6 und 10 als Drehimpulsgeber mit integrierter Tastenfunktion ausgebildet, so dass durch eine Drehung des Bedienelementes 6, 10, im oder gegen den Uhrzeigersinn, die den Bedien- und Anzeigeelementen 6, 8 bzw. 10, 12 zugeordneten Programme, Programmparameter und Benutzerkennzeichnungen farbig hervorgehoben zur Anzeige gebracht und durch eine Betätigung der Tastenfunktion des Bedienelementes 6, 10 ausgewählt sind. Die Anzeigeelemente 8, 12 sind als graphikfähige Anzeigen ausgebildet, so dass sowohl Klartext wie auch graphische Symbole und Zahlen einzeln oder in Kombination miteinander darstellbar sind. Da der Getränkebereiter aus Fig. 2 ein Kompaktgerät ist, sind die auf den Anzeigeelementen 8, 12 erscheinenden Anzeigeninhalte hierarchisch strukturiert, so dass die Anzeigeelemente 8 und 12 platzsparend ausgeführt sind. Ferner sind die einander zugeordneten Bedien- und Anzeigeelemente 6 und 8 bzw. 10 und 12 nahe beieinander angeordnet, um die Übersichtlichkeit bei der Bedienung weiter zu verbessern. Die Übersichtlichkeit wird ebenfalls durch einen größeren Abstand von den Bedien- und Anzeigeelementen 6 und 8 zu den Bedien- und Anzeigeelementen 10 und 12 erhöht.

Des weiteren ist bei dem obigen Ausführungsbeispiel eine nicht dargestellte Programmsteuerung vorgesehen, die einen Mikroprozessor als Datenverarbeitungsmittel und einen Datenspeicher enthält. Die Bedien- und Anzeigeelemente 6, 8, 10 und 12 sowie der Datenspeicher sind über elektrische Leitungen mit dem Mikroprozessor verbunden, so dass zwischen dem Mikroprozessor und den Bedien- und Anzeigeelementen 6, 8, 10 und 12 sowie dem Datenspeicher Daten austauschbar sind. Auf diese Weise ist es möglich, über Eingaben an den Bedienelementen 6 und 10 Einstellungen in den Programmparametern vorzunehmen, diese Einstellungen einer ebenfalls über die Bedienelemente 6 und 10 eingegebenen Benutzerkennzeichnung zuzuordnen und unter dieser abzuspeichem. Ist der Getränkebereiter unter einer Benutzerkennzeichnung in Betrieb genommen, so sind durch die Auswahl eines Programms über das Bedienelement 6 die für den Ablauf des ausgewählten Programms erforderlichen Programmparameter in ihren Einstellungen aus dem Datenspeicher wieder aufgerufen und für den Programmablauf genutzt. Die Programmsteuerung des erfindungsgemäßen Getränkebereiters ist aus Platzgründen und insbesondere aufgrund technischer Erfordernisse lediglich teilweise in räumlicher Nähe zu dem Bedien- und Anzeigefeld 4 angeordnet und steht über nicht dargestellte elektrische Leitungen mit einem in Fig. 1 ebenfalls nicht dargestellten Leistungsteil in Verbindung, so dass zwischen dem Mikroprozessor und dem Leistungsteil Signale ausgetauscht werden.

Fig. 2 zeigt als erfindungsgemäßes Haushaltsgerät den Getränkebereiter 2 aus Fig. 1 in vereinfachter Darstellung. Das in Fig. 1 dargestellte Detail befindet sich im oberen Bereich des in Fig. 2 abgebildeten Getränkebereiters.

Nachfolgend wird die Benutzung des obigen Getränkebereiters 2 anhand der Fig. 1 und 2 beispielhaft erläutert:
Der Getränkebereiter 2 aus Fig. 2 ist ausgeschaltet und seine Heizung auf Betriebstemperatur. Durch betätigen der Tastenfunktion von Bedienelement 10 erscheint auf dem Anzeigeelement 12 die zuletzt verwendete Benutzerkennzeichnung. Der Benutzer kann durch Drehung des Bedienelementes 10 die vorhandenen Benutzerkennzeichnungen auf dem Anzeigeelement 12 nacheinander zur Anzeige bringen. Durch Betätigen der Tastenfunktion von Bedienelement 10 wählt der Benutzer die gewünschte Benutzerkennzeichnung aus. Durch Betätigen der Tastenfunktion von Bedienelement 6 wird der Getränkebereiter 2 eingeschaltet und die Einstellungen eines letzten Zapfvorganges, der unter dieser Benutzerkennzeichnung vorgenommen worden ist, werden von dem Datenspeicher in den Mikroprozessor übernommen und auf den Anzeigeelementen 8 und 12 teilweise angezeigt. Beispielsweise wird auf dem Anzeigeelement 8 als Programm die Kaffeesorte des letzten Zapfvorganges angezeigt und auf dem Anzeigeelement 12 als Programmparameter die für diese Kaffeesorte zuletzt verwendete Tassengröße. Wie aus Fig. 1 ersichtlich, werden auch andere Hinweise und Informationen angezeigt. Sollte die Heizung des Getränkebereiters 2 bei dessen Einschalten noch nicht auf Betriebstemperatur aufgeheizt sein, so erscheint beispielsweise die Anzeige "Aufheizphase, Bitte warten!" auf dem Anzeigeelement 12. Sofern der Benutzer die Einstellungen der Programmparameter übernehmen möchte, startet er den Zapfvorgang durch ein erneutes Betätigen der Tastenfunktion von Bedienelement 10. Hierdurch wird das Programm gestartet, welches letztlich zu dem Zapfen der Kaffeesorte führt, die bei dem letzten Zapfvorgang unter der Benutzerkennzeichnung genutzt worden ist. Die unter der Benutzerkennzeichnung gespeicherten Einstellungen der Programmparameter dieses Programms werden von dem Mikroprozessor für den Programmablauf genutzt. Mittels des Bedienelementes 6 kann der Benutzer auch andere Programme auswählen, für deren Programmablauf entsprechend unter der Benutzerkennzeichnung abgespeicherte Einstellungen der Programmparameter dieser Programme genutzt sind.

Ferner hat der Benutzer die Möglichkeit, die Einstellungen der Programmparameter zu ändern. Beispielsweise sind folgende Programmparameter für die Einstellung durch den Benutzer vorgesehen: Tassengröße, Inhalt und Temperaturniveau einer kleinen Tasse, großen Tasse und einer Tasse, bei der die doppelte Kaffeemenge verwendet wird, Sprache und Einstellung der Beleuchtung. Von diesen Programmparametem werden bei dem Ausführungsbeispiel bis auf die drei letztgenannten, die über den Einstellmodus eingestellt und abgespeichert werden, alle über das Starten des Zapfvorgangs eingestellt und abgespeichert. In beiden Fällen wird unter der vorher gewählten Benutzerkennzeichnung abgespeichert. Bei diesem Ausführungsbeispiel ist für die nachfolgenden Programmparameter mit einer in einem Programm vorgenommenen Einstellung der entsprechende Programmparameter in einem anderen Programm eingestellt: Inhalt und Temperatumiveau der kleinen Tasse, großen Tasse und der Tasse, bei der die doppelte Kaffeemenge verwendet wird. Beispielsweise ist bei allen Programmen, die beim Zapfen eine große Tasse verwenden, die gleiche Inhaltsmenge vorgesehen.

Andere Programmparameter, wie beispielsweise eine Sortenzuordnung zu einzelnen Magazinen in dem Getränkebereiter 2, Sortenbezeichnung, Wasserhärte, Einschlafzeit, die nach jeder Benutzung erneut zu laufen beginnt und nach deren Verstreichen der Getränkebereiter 2 von einem ersten Betriebsmodus, in dem alle Funktionen verfügbar sind, in einen zweiten Betriebsmodus, in dem einzelne Funktionen, wie beispielsweise die Anzeige auf den Anzeigeelementen 8, 12, nicht verfügbar sind, versetzt wird und regelmäßige, automatisch gesteuerte Entkalkungen, sind zweckmäßigerweise für alle Benutzer gleich einstellbar. Eine individuelle Einstellung dieser Programmparameter für einzelne Benutzer ist bei diesem Ausführungsbeispiel nicht vorgesehen.

Ferner ist es möglich, für alle Benutzer eine Start- und Stoppzeit als Programmparameter für einen Standby-Modus, in dem beispielsweise die Heizung des Getränkebereiters 2 automatisch auf Betriebstemperatur gehalten ist, während andere Funktionen abgeschaltet sind, vorzusehen.

Des weiteren besteht die Möglichkeit, die Benutzerkennzeichnungen für eine personenbezogene Abrechnung des Kaffeebedarfs zu nutzen. Da das Ausführungsbeispiel ein Nespresso-System enthält, bei dem der Kaffee in Kapseln portioniert ist, ist dies besonders einfach durch eine Zählung der Kapseln möglich. Damit ein Missbrauch verhindert wird, ist es möglich, den Zugriff auf die jeweilige Benutzerkennzeichnung mit der Eingabe eines Kennwortes zu verbinden.

Der Benutzer hat bei eingeschaltetem Getränkebereiter 2 ferner die Möglichkeit, die vorgenommenen Einstellungen der Programmparameter unter einer neuen Benutzerkennzeichnung abzuspeichem. Dazu dreht der Benutzer das Bedienelement 6 soweit, bis das auf dem Anzeigeelement 8 der Buchstabe "E" für den Einstellmodus farbig unterlegt ist, wodurch der Einstellmodus ausgewählt ist und die über den Einstellmodus einstellbaren Parameter auf dem Anzeigeelement 12 angezeigt werden. Der Benutzer dreht Bedienelement 10 soweit, bis das auf dem Anzeigeelement 12 ein Symbol für einen Programmiermodus farbig unterlegt ist. Durch Betätigen der Tastenfunktion von Bedienelement 10 wird der Programmiermodus ausgewählt und die einstellbaren Programmparameter werden auf dem Anzeigeelement 12 angezeigt. Der Benutzer dreht Bedienelement 10 soweit, bis das auf dem Anzeigeelement 12 ein Symbol für einen Einstellmodus für die Benutzerkennzeichnung farbig unterlegt ist. Durch Betätigen der Tastenfunktion von Bedienelement 10 wird der Einstellmodus für die Benutzerkennzeichnung ausgewählt und über das Bedienetement 10 wird die neue Benutzerkennzeichnung wie oben beschrieben eingegeben. An dem Anzeigeelement 12 wird die Eingabe angezeigt. Ist die Eingabe beendet, wird sie über das Bedienelement 10 bestätigt und die vorgenommenen Einstellungen der Programmparameter werden automatisch unter der neuen Benutzerkennzeichnung abgespeichert.

Alternativ zu der oben angegebenen Einstellung der Benutzerkennzeichnung ist es ebenfalls möglich, den Einstellmodus für die Benutzerkennzeichnung analog zu der Auswahl des Einstellmodus "E" auszuwählen. Dabei wird auf dem Anzeigeelement 8 neben dem Buchstaben "E" auch das Symbol für den Einstellmodus für die Benutzerkennzeichnung angezeigt. Über die bereits erläuterte Betätigung des Bedienelements 6 wird dann der Einstellmodus für die Benutzerkennzeichnung ausgewählt, so dass auf dem Anzeigeelement 12 im Unterschied zu der vorgenannten Ausführungsform gleich die bereits bestehenden Benutzerkennzeichnungen erscheinen. Die weitere Verfahrensweise bei der Eingabe einer neuen Benutzerkennzeichnung erfolgt wie oben beschrieben. Auf diese Weise ist die Bedienung für den Benutzer weiter vereinfacht, da ein Bedienschritt entfallen ist.

In einem zweiten in den Fig. nicht dargestellten Ausführungsbeispiel der erfindungsgemäßen Lehre handelt es sich ebenfalls um einen Getränkebereiter. Dieser Getränkebereiter weist im Unterschied zu dem ersten Ausführungsbeispiel ein großes als graphikfähige Anzeige ausgebildetes Anzeigeelement auf, dem ebenfalls zwei entsprechend den Bedienelementen 6 und 10 ausgebildete Bedienelemente zugeordnet sind. Die Anzeige des Anzeigeelements ist in diesem Ausführungsbeispiel durch eine auf dem Anzeigeelement dargestellte Trennungslinie in zwei Bereiche unterteilt, so dass sich zwei dem ersten und dem zweiten Anzeigeelement 8, 12 des ersten Ausführungsbeispiels ähnliche Anzeigebereiche ergeben. Abweichend hiervon ist es jedoch auch möglich, das Anzeigeelement als eine einzelne Anzeige zu nutzen.

Die Funktionsweise des Getränkebereiters des zweiten Ausführungsbeispiels ist analog zu der des ersten Ausführungsbeispiels, mit den nachfolgend erläuterten Unterschieden:
Der Getränkebereiter ist ausgeschaltet. Mit einem Druck auf das dem Bedienelement 6 entsprechende Bedienelement wird der Getränkebereiter eingeschaltet und in der Anzeige erscheint unter anderem ein Symbol, dass dem Benutzer das Vorliegen einer vorgenommenen Auswahl einer von einer Standard-Benutzerkennzeichnung abweichenden Benutzerkennzeichnung anzeigt. Bei diesem Ausführungsbeispiel können, unabhängig von für andere Benutzerkennzeichnungen vorhandene Sicherungsmittel zur Verhinderung einer unbefugten oder ungewollten Vornahme von Einstellungen unter der jeweiligen Benutzerkennzeichnung, Einstellungen vorgenommen, abgespeichert und wieder aufgerufen werden. Wäre die zeitlich zuletzt ausgewählte Benutzerkennzeichnung die Standard-Benutzerkennzeichnung gewesen, würde das vorgenannte Symbol nicht angezeigt werden. Abweichend von diesem Ausführungsbeispiel ist es ebenfalls möglich, die Benennung der konkret ausgewählten Benutzerkennzeichnung anzeigen zu lassen. Ferner erscheint mit dem Einschalten des Getränkebereiters ein Symbol für den Einstellmodus für die Benutzerkennzeichnung auf dem Anzeigeelement. Wird dieses Symbol, wie bei dem ersten Ausführungsbeispiel erläutert, ausgewählt, werden die bereits existierenden Benutzerkennzeichnungen auf dem Anzeigeelement angezeigt und der bereits zu dem ersten Ausführungsbeispiel beschriebene Einstellmodus für die Benutzerkennzeichnung ist ausgewählt. Im Gegensatz zu dem ersten Ausführungsbeispiel, bei dem die Auswahl der Benutzerkennzeichnung bei ausgeschaltetem Getränkebereiter 2 erfolgt und der Getränkebereiter 2 nach erfolgter Auswahl unter dieser Benutzerkennzeichnung in Betrieb genommen werden kann, wird die Auswahl der Benutzerkennzeichnung hier bei eingeschaltetem Getränkebereiter 2 vorgenommen. Ein weiterer Unterschied zu dem ersten Ausführungsbeispiel besteht darin, dass dieser Getränkebereiter nicht über eine vorher eingerichtete Anzahl von Benutzerkennzeichnungen verfügt, unter denen Einstellungen abgespeichert werden können. Bei dem Getränkebereiter dieses Ausführungsbeispiels werden die Benutzerkennzeichnungen bei Bedarf von dem Benutzer angelegt und erst zeitlich danach ist unter der dann existierenden Benutzerkennzeichnung ein Abspeichern von Einstellungen möglich. Sofern noch keine individuellen Benutzerkennzeichnungen angelegt worden sind, werden bei diesem Getränkebereiter die Standard-Benutzerkennzeichnung und mögliche einstellbare Programmparameter des Einstellmodus, wie beispielsweise Benutzerkennzeichnung: anlegen, ändern, löschen und selbsttätig auf Standard-Benutzerkennzeichnung umschalten: nie, nach jedem Zapfvorgang oder mit dem Einschalten des Getränkebereiters, angezeigt. Die Auswahl der gewünschten Einstellung des entsprechenden Programmparameters erfolgt auf die bereits zu dem ersten Ausführungsbeispiel erläuterte Weise. Die Einstellungen zu dem selbsttätigen Umschalten von einer beliebigen Benutzerkennzeichnung zu der Standard-Benutzerkennzeichnung sind von den anderen Benutzerkennzeichnungen unabhängig, so dass dieser Programmparameter für alle Benutzerkennzeichnungen gleich eingestellt ist.

Durch die funktionelle und räumliche Zuordnung des Bedienelementes 6 bzw. 10 zu dem Anzeigeelement 8 bzw. 12 ist der Getränkebereiter 2 als erfindungsgemäßes Haushaltsgerät im Vergleich zu bekannten Haushaltsgeräten in seiner Übersichtlichkeit verbessert. Da vorgenommene Einstellungen der Programmparameter Benutzerkennzeichnungen zuordenbar, unter diesen abspeicherbar und über die Auswahl eines Programms aufrufbar sind, ist die Bedienung selbst bei häufig wechselnden Benutzem und einer Vielzahl von Programmen, Programmparametem und Einstellungsmöglichkeiten der Parameter wesentlich vereinfacht, was die Übersichtlichkeit weiter verbessert.

## Patentansprüche

1. Haushaltsgerät,
mit wenigstens einem Bedien- und wenigstens einem Anzeigeelement,
wobei mit dem (den) Bedienelement(en) Programme auswählbar sind, bei denen jeweils ein Programmparameter über das oder die Bedienelement(e) einstellbar ist, sowie voneinander verschiedene Kennzeichnungen einstellbar und auswählbar sind,
mit einer Programmsteuerung, die ein Datenverarbeitungsmittel und einen Datenspeicher enthält,
wobei die Bedien- und Anzeigeelemente sowie der Datenspeicher mit dem Datenverarbeitungsmittel in Datenübertragungsverbindung stehen und die Einstellung des Programmparameters eines Programms einer Kennzeichnung zugeordnet, unter dieser abspeicherbar und über die an dem oder den Bedienelement(en) (6, 10) vorgenommene Auswahl des Programms aufrufbar ist,
**dadurch gekennzeichnet,**
**dass** die Kennzeichnungen als Benutzerkennzeichnungen ausgebildet sind und die unter einer Benutzerkennzeichnung abgespeicherte Einstellung eines Programmparameters für den Programmablauf einer Mehrzahl von voneinander verschiedenen Programmen nutzbar ist, die zeitlich nachher unter dieser Benutzerkennzeichnung ausgewählt werden.

2. Haushaltsgerät nach Anspruch 1,
**dadurch gekennzeichnet,**
**dass** ein erstes Bedienetement (6) zur Auswahl des Programms und ein zweites Bedienelement (10) zur Auswahl des Programmparameters sowie dessen Einstellung und zur Zuordnung der Einstellung zu der Benutzerkennzeichnung ausgebildet ist, wobei dem ersten Bedienetement (6) ein erstes Anzeigeelement (8) und dem zweiten Bedienelement (10) ein zweites Anzeigeelement (12) zugeordnet ist.

3. Haushaltsgerät nach Anspruch 1 oder 2,
**dadurch gekennzeichnet,**
**dass** mit der Einstellung wenigstens eines ersten Programmparameters in einem ersten Programm ein dem ersten Programmparameter entsprechender zweiter Programmparameter in einem zweiten Programm eingestellt ist.

4. Haushaltsgerät nach einem der Ansprüche 1 bis 3,
**dadurch gekennzeichnet,**
**dass** wenigstens ein Bedienetement (6, 10) eine Taste aufweist.

5. Haushaltsgerät nach Anspruch 4,
**dadurch gekennzeichnet,**
**dass** wenigstens ein Bedienetement (6, 10) ein Drehimpulsgeber mit integrierter Tastenfunktion ist.

6. Haushaltsgerät nach einem der vorangegangenen Ansprüche,
**gekennzeichnet durch**
ein Sicherungsmittel zur Verhinderung einer unbefugten oder ungewollten Vornahme der Einstellung unter einer Benutzerkennzeichnung.

7. Haushaltsgerät nach Anspruch 6,
**dadurch gekennzeichnet,**
**dass** der Zugriff auf eine Benutzerkennzeichnung kennwort-geschützt ist.

8. Haushaltsgerät nach einem der vorangegangenen Ansprüche,
**dadurch gekennzeichnet,**
**dass** die vorgenommene Auswahl einer einzelnen Benutzerkennzeichnung oder aus einer Gruppe von Benutzerkennzeichnungen auf dem ersten und/oder dem zweiten Anzeigeelement (8, 12) anzeigbar ist.

9. Haushaltsgerät nach einem der vorangegangenen Ansprüche,
**dadurch gekennzeichnet,**
**dass** eine Benutzerkennzeichnung als eine Standard-Benutzerkennzeichnung ausgebildet ist, wobei das Datenverarbeitungsmittel in Abhängigkeit einer vorher festgelegten Schaltbedingung selbsttätig von einer beliebigen Benutzerkennzeichnung auf die Standard-Benutzerkennzeichnung umschaltet.

10. Haushaltsgerät nach einem der vorangegangenen Ansprüche, wobei das Haushaltsgerät ein Getränkebereiter (2) ist,
**dadurch gekennzeichnet,**
**dass** durch den Zapfvorgang die Einstellung wenigstens eines Programmparameters unter der Benutzerkennzeichnung abspeicherbar ist.

## Claims

1. Household appliance,
including at least one control element and at least one display element, wherein programs are selectable by means of the control element or elements, each of said programs having a program parameter which is adjustable via the control element or elements, as well as being adjustable and selectable through identification symbols which differ from one another,
including a program control, which contains a data processing means and a data memory,
wherein the operating and display elements and the data memory are connected to the data processing means so as to communicate and the adjustment of the program parameter of a program is associated with an identification symbol, is storable under said identification symbol and can be called up via the selection of the program made at the control element or elements (6, 10), **characterised in that** the identification symbols are in the form of user identification symbols and the adjustment of a program parameter stored under a user identification symbol is useable for the program sequence of several programs which differ from one another and which are selected one after the other in time under this user identification symbol.

2. Household appliance according to claim 1, **characterised in that** a first control element (6) is configured for the selection of the program and a second control element (10) is configured for the selection of the program parameter along with its adjustment and for the association of the adjustment with the user identification symbol, wherein a first display element (8) is associated with the first control element (6) and a second display element (12) is associated with the second control element (10).

3. Household appliance according to claim 1 or 2, **characterised in that** as at least one first program parameter is being adjusted in a first program, a second program parameter corresponding to the first program parameter is adjusted in a second program.

4. Household appliance according to one of claims 1 to 3, **characterised in that** at least one control element (6, 10) has a key.

5. Household appliance according to claim 4, **characterised in that** at least one control element (6, 10) is a rotary electronic pulse generator with integrated keying function.

6. Household appliance according to one of the preceding claims, **characterised by** a protection means to prevent unauthorised or unwanted undertaking of the adjustment under a user identification symbol.

7. Household appliance according to claim 6, **characterised in that** the access to a user identification symbol is password-protected.

8. Household appliance according to one of the preceding claims, **characterised in that** the selection undertaken of an individual user identification symbol or produced from a group of user identification symbols is displayable on the first and/or the second display element (8, 12).

9. Household appliance according to one of the preceding claims, **characterised in that** a user identification symbol is in the form of a standard user identification symbol, wherein the data processing means automatically switches over from an arbitrary user identification symbol to a standard user identification symbol in dependence on a switching condition which has been established beforehand.

10. Household appliance according to one of the preceding claims, wherein the household appliance is a drinks making machine (2), **characterised in that** by means of the tapping process the adjustment at least of one program parameter is storable under the user identification symbol.

## Revendications

1. Appareil ménager
comprenant au moins un élément de commande et au moins un élément d'affichage,
le ou les élément(s) de commande permettant de sélectionner des programmes dans lesquels un paramètre respectif peut être réglé par l'intermédiaire de l'élément ou des éléments de commande, de même que des caractérisations différentes les unes des autres peuvent être réglées et sélectionnées,
une commande de programmation, comprenant un moyen de traitement de données et une mémoire de données,
les éléments de commande et d'affichage, ainsi que la mémoire de données, étant en liaison de transmission de données avec le moyen de traitement de données, et le réglage du paramètre d'un programme étant affecté à une caractérisation, pouvant être mémorisé sous cette dernière, et pouvant être appelé par la sélection du programme exécutée sur l'élément ou les éléments de commande (6, 10),
**caractérisé par le fait**
**que** les caractérisations sont conçues comme des caractérisations d'utilisateurs et le réglage d'un paramètre, mémorisé sous une caractérisation d'utilisateur, est utilisable pour le déroulement d'une pluralité de programmes différant les uns des autres, qui sont ensuite temporellement sélectionnés sous cette caractérisation d'utilisateur.

2. Appareil ménager selon la revendication 1,
**caractérisé par le fait**
**qu'**un premier élément de commande (6) est conçu pour la sélection du programme, et un second élément de commande (10) est conçu pour la sélection du paramètre de programme, ainsi que pour le réglage de ce dernier et pour l'assignation dudit réglage à la caractérisation d'utilisateur, un premier élément d'affichage (8) étant affecté au premier élément de commande (6), et un second élément d'affichage (12) étant affecté au second élément de commande (10).

3. Appareil ménager selon la revendication 1 ou 2,
**caractérisé par le fait**
**que**, avec le réglage d'au moins un premier paramètre de programme dans un premier programme, un second paramètre de programme, correspondant audit premier paramètre, est réglé dans un second programme.

4. Appareil ménager selon l'une des revendications 1 à 3,
**caractérisé par le fait**
**qu'**au moins un élément de commande (6, 10) comporte une touche.

5. Appareil ménager selon la revendication 4,
**caractérisé par le fait**
**qu'**au moins un élément de commande (6, 10) est un générateur d'impulsions angulaires à fonction de touche intégrée.

6. Appareil ménager selon l'une des revendications précédentes,
**caractérisé par**
un moyen de sûreté pour empêcher une exécution non autorisée ou involontaire du réglage sous une caractérisation d'utilisateur.

7. Appareil ménager selon la revendication 6,
**caractérisé par le fait**
**que** l'accès à une caractérisation d'utilisateur est protégé par mot de passe.

8. Appareil ménager selon l'une des revendications précédentes,
**caractérisé par le fait**
**que** la sélection, portant sur une caractérisation d'utilisateur individuelle ou effectuée à partir d'un groupe de caractérisations d'utilisateurs, peut être affichée sur le premier et/ou le second élément d'affichage (8, 12).

9. Appareil ménager selon l'une des revendications précédentes,
**caractérisé par le fait**
**qu'**une caractérisation d'utilisateur est conçue comme une caractérisation d'utilisateur standard, le moyen de traitement de données commutant automatiquement, en fonction d'une condition de commutation fermement établie au préalable, pour passer d'une quelconque caractérisation d'utilisateur à la caractérisation d'utilisateur standard.

10. Appareil ménager selon l'une des revendications précédentes, ledit appareil ménager étant un préparateur de boissons (2),
**caractérisé par le fait**
**que** le réglage d'au moins un paramètre de programme peut être mémorisé, sous la caractérisation d'utilisateur, suite à l'opération de prélèvement.
